# EUROPÄISCHE PATENTSCHRIFT

(11) **EP 2 484 195 B1**
(45) Veröffentlichungstag und Bekanntmachung des Hinweises auf die Patenterteilung: **31.07.2013**
(21) Anmeldenummer: 12151870.8
(22) Anmeldetag: 20.01.2012
(51) Int. Cl.: A01D 46/24, B60P 1/04, B60P 1/43, B66F 9/12

(54) **Erntefahrzeug**
Harvester
Récolteuse

(30) Priorität: 07.02.2011 DE 102011010547
(43) Veröffentlichungstag der Anmeldung: 08.08.2012
(73) Patentinhaber: ATI - Advanced Technology International AG electric drives, 8832 Wollerau (CH)
(72) Erfinder: Burger, Martin, 6020 Innsbruck (AT); Lanpacher, Michael, 39025 Naturns (IT)
(74) Vertreter: Kohler Schmid Möbus

(56) Entgegenhaltungen:
- EP-A1- 0 580 205
- BE-A3- 1 007 486
- US-A- 2 745 566
- US-A- 3 467 268
- US-A1- 2009 155 033
- US-A1- 2010 303 596

## Beschreibung

Die Erfindung betrifft ein Erntefahrzeug mit den Merkmalen des Oberbegriffs des Anspruchs 1.

Ein solches Fahrzeug ist aus der EP 0 580 205 A1 bereits bekannt. Während des Bewegens des Kipprahmens mit der vollen Erntekiste ist bei diesem Fahrzeug der Kipprahmen stark gegenüber der Fahrzeugmitte nach hinten versetzt. Wegen der dadurch entstehenden Verschiebung des Schwerpunktes des Fahrzeugs kann dieses in ungünstigen Fällen kippen. Außerdem kann die Erntekiste beim Abladen auch selbstständig ins Rutschen kommen und auf dem Boden aufschlagen, was zu Beschädigungen des Obsts führen kann.

Der vorliegenden Erfindung liegt die Aufgabe zugrunde, ein Erntefahrzeug vorzuschlagen, das eine höhere Kippsicherheit aufweist und ein schonendes Abladen gewährleistet.

Die Aufgabe wird gelöst mit einem Erntefahrzeug mit den Merkmalen des Anspruchs 1.

Mit Hilfe der Schwenkvorrichtung führt die Plattform beim Abladen einer Erntekiste sowohl eine translatorische als auch eine Schwenkbewegung nach hinten aus, d. h. ihre Mittelachse führt eine flache bogenförmige Bewegung aus. Dies bedeutet, dass sich die Plattform mit der Erntekiste während des Erntevorgangs in stabiler Lage in der Nähe der Fahrzeugmitte befinden kann, wodurch das Fahrzeug eine hohe Kippsicherheit auch in geneigtem Gelände erhält. Der translatorische Anteil der Bewegung der Plattform sorgt dafür, dass die Erntekiste aus dieser zentralen Lage auf dem Fahrzeug dennoch hinter das Fahrzeug gebracht und dort abgeladen werden kann.

An der Plattform ist außerdem mindestens ein Stützrad angeordnet, das beim Bewegen der Plattform mittels der Schwenkvorrichtung die Plattform am Boden abstützt.

Das oder die Stützräder verhindern, dass das Fahrzeug nach hinten kippt, wenn die Plattform nach hinten verschwenkt wird, um eine auf ihr befindliche Erntekiste abzuladen. Außerdem lässt sich die Erntekiste mit Hilfe des mindestens einen Stützrads sanft auf dem Boden absetzen. Eine Beschädigung des Obsts kann dabei nicht auftreten.

Die Schwenkvorrichtung lässt sich auf verschiedene Arten realisieren. Eine besonders stabile und konstruktiv einfache Möglichkeit besteht darin, die Schwenkvorrichtung mit zwei Paaren von gelenkig mit der Plattform und mit dem Fahrzeugchassis verbundenen Hebelanordnungen auszustatten, wobei das erste Paar,an einem vorderen Bereich der Plattform und das zweite, mit kürzeren Hebelanordnungen ausgestattete Paar an einem dahinter liegenden Bereich der Plattform angreift und wobei mindestens eine im vorderen Bereich der Plattform angreifende Zylinder-Kolben-Anordnung zur Auslösung der Schwenkbewegung vorgesehen ist. Durch die kürzere Hebelanordnung im hinteren Bereich des Fahrzeugs erhält die Plattform beim Verschwenken automatisch die gewünschte Neigung zum Abladen der Erntekiste.

Weitere Vorteile ergeben sich, wenn das mindestens eine Stützrad am freien Ende eines verschwenkbar an der Plattform gelagerten Stützbeins angeordnet ist. Auf dieses Weise kann das Stützrad bereits eine Bodenberührung aufnehmen, wenn die Plattform noch nicht vollständig gekippt ist. Beim weiteren Verschwenken der Plattform neigt sich auch das Stützbein, sodass das Stützrad die weitere Schwenkbewegung der Plattform nicht behindert. Dabei kann zweckmäßigerweise eine Führung vorgesehen sein, die das mindestens eine Stützrad in unterschiedlichen Schwenkwinkeln der Plattform in Bodenkontakt hält. Diese Führung sorgt dafür, dass die Schwenkbewegungen der Plattform und des mindestens einen Stützrads aufeinander abgestimmt sind, sodass die Stützwirkung beim gesamten Entladevorgang gewährleistet ist.

Für die Ausgestaltung der Führung gibt es unterschiedliche Möglichkeiten. Bei einer bevorzugten Ausführungsform kann die Führung von mindestens einer gelenkig mit dem mindestens einen Stützbein und der Hebelanordnung verbundenen Zylinder-Kolben-Anordnung gebildet sein. Bei dieser Ausgestaltung kann das Stützbein nach dem Entladevorgang und dem Zurückschwenken der Plattform wieder in seine Ausgangsstellung gebracht werden.

Um eine möglichst hohe Stabilität auch in seitlicher Richtung beim Entladen der Plattform zu gewährleisten, können vorzugweise zwei Stützräder vorgesehen sein. Dabei können die Stützbeine beider Stützräder gemeinsam schwenkbar an der Plattform angeordnet sein. Dadurch bewegen sich beide Stützräder stets parallel zueinander.

Weitere Vorteile ergeben sich, wenn die Plattform einfahrbare Haken aufweist, die eine Erntekiste beim Abladen gegen ein Rutschen auf der Plattform sichern. Sind die Haken ausgefahren, so können die Erntekisten beim Abladen auch bei schräg gestellter Plattform nicht selbsttätig von der Plattform gleiten und hart auf dem Boden aufprallen, was zu Beschädigungen des Obsts führen könnte. Die Haken werden erst dann eingefahren, wenn die Erntekiste durch Verschwenken der Plattform schon Bodenkontakt erhalten hat oder sich dicht über dem Boden befindet.

Das Erntefahrzeug kann außerdem in an sich bekannter Weise einen elektromotorischen Allradantrieb aufweisen. Dieser Antrieb kann so ausgelegt sein, dass das Fahrzeug in einem Gelände mit bis zu 25 % Steigung eingesetzt werden kann. Weiter kann eine Panzerlenkung vorgesehen werden, um eine optimale Wendigkeit, Steigfähigkeit und Traktion des Fahrzeugs zu gewährleisten.

Das Fahrzeug kann manuell gefahren werden. Entscheidende Vorteile ergeben sich jedoch, wenn es eine programmierbare Steuereinheit aufweist, mit der das Fahrzeug selbsttätig mit einer vorgebbaren Geschwindigkeit und/oder über eine vorgebbare Distanz und/oder in einem kontinuierlichen oder in einem Intervallbetrieb bewegbar ist. Mit Hilfe dieser Steuerung kann das Fahrzeug entsprechend den zu leistenden Ernteaufgaben vollständig selbsttätig bewegt werden, sodass sich die das Fahrzeug nutzenden Pflücker auf ihre Aufgabe konzentrieren können und nicht mit dem Bewegen des Fahrzeugs beschäftigt sind.

Die Einsatzmöglichkeiten des Fahrzeugs lassen sich durch entsprechende Zusatzaggregate erweitern. So können am Fahrzeug beispielsweise Ausleger zur Aufnahme mindestens einer weiteren Erntekiste angeordnet werden. Diese Ausleger lassen sich insbesondere zum Mitnehmen leerer Erntekisten einsetzen.

Auf der Plattform kann außerdem eine Arbeitsbühne befestigt werden, sodass das Fahrzeug auch zum Ernten von Früchten im Gipfelbereich von Bäumen eingesetzt werden kann. Zusätzlich oder alternativ kann außerdem eine Ernteplattform mit seitlichen, ausziehbaren Leitern montierbar sein. Auch mit Hilfe dieser Leitern ist ein Ernten im bodenfernen Bereich möglich. Ist eine Arbeitsbühne oder eine Ernteplattform mit Leitern am Fahrzeug montiert, so können vier oder mehr Personen gegenüberliegende Baumreihen abernten.

Auf der Plattform kann jedoch auch ein verstellbarer Sitz befestigt werden, sodass das Fahrzeug beispielsweise auch zur Unterstockpflege im Weinbau eingesetzt werden kann.

Im Folgenden werden bevorzugte Ausführungsbeispiele eines erfindungsgemäßen Erntefahrzeugs anhand der Zeichnung näher beschrieben.

Im Einzelnen zeigen:
- Fig. 1: eine perspektivische Ansicht eines Erntefahrzeugs;
- Fig. 2a - d: Seitenansichten des Erntefahrzeugs aus Fig. 1 mit einer Plattform zur Aufnahme und zum Abladen von Erntekisten in unterschiedlichen Schwenkstellungen;
- Fig. 3: eine perspektivische Detailansicht des Hecks des Fahrzeugs aus Fig. 1;
- Fig. 4: eine perspektivische Ansicht des Erntefahrzeugs aus Fig. 1 mit einer Erntekiste und einer montierten Ernteplattform;
- Fig. 5: eine Seitenansicht des Erntefahrzeugs aus Fig. 1 mit einer montierten Arbeitsbühne;
- Fig. 6: eine perspektivische Ansicht eines zweiten Erntefahrzeugs.

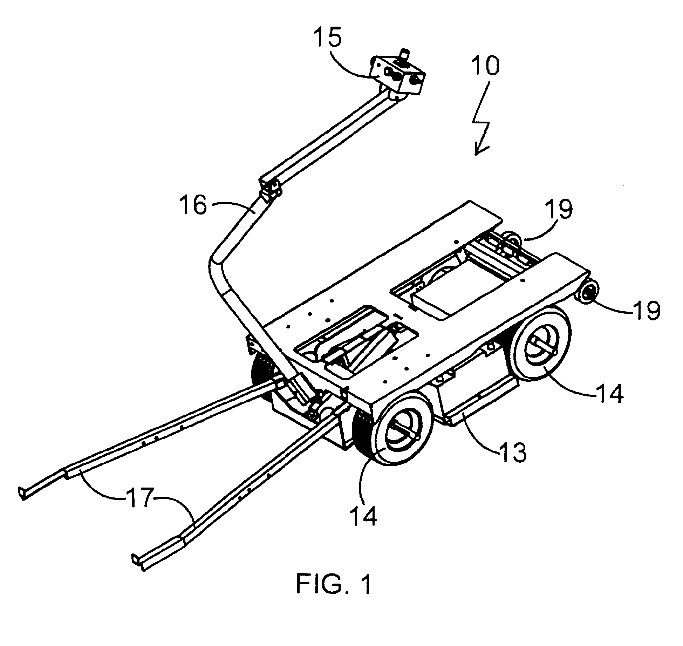

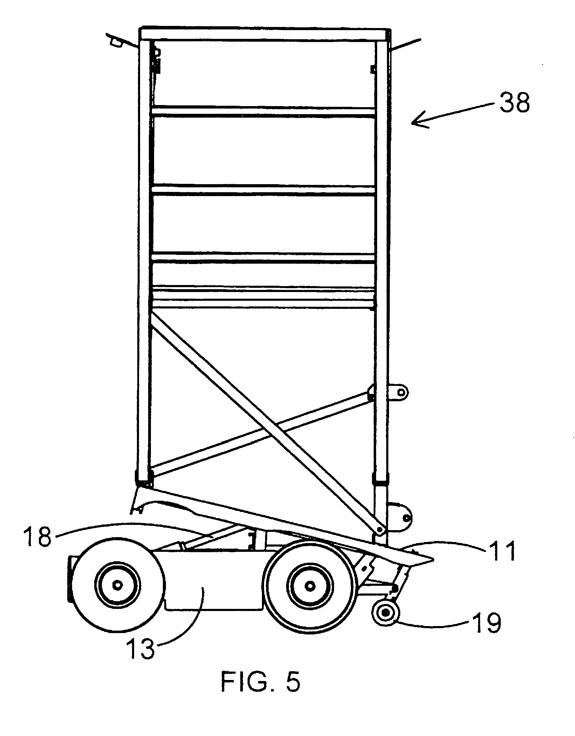

Fig. 1 zeigt in einer perspektivischen Draufsicht ein Erntefahrzeug 10, das eine Plattform 11 zur Aufnahme von einer in Fig. 5 dargestellten Erntekiste 12 aufweist. Die Plattform 11 ist auf einem Fahrzeugchassis 13 montiert, das von vier Rädern 14 angetrieben wird. Das Fahrzeug 10 weist außerdem eine Steuereinrichtung auf, von der ein Steuerpult 15 dargestellt ist. Das Steuerpult 15 ist an einem Tragarm 16 befestigt, der drehbar und seitlich abkippbar am Chassis 13 befestigt ist. In Fig. 1 sind außerdem zwei Ausleger 17 dargestellt, die optional am Fahrzeugchassis 13 befestigt werden können und die der Aufnahme mindestens einer weiteren Erntekiste 12 dienen.

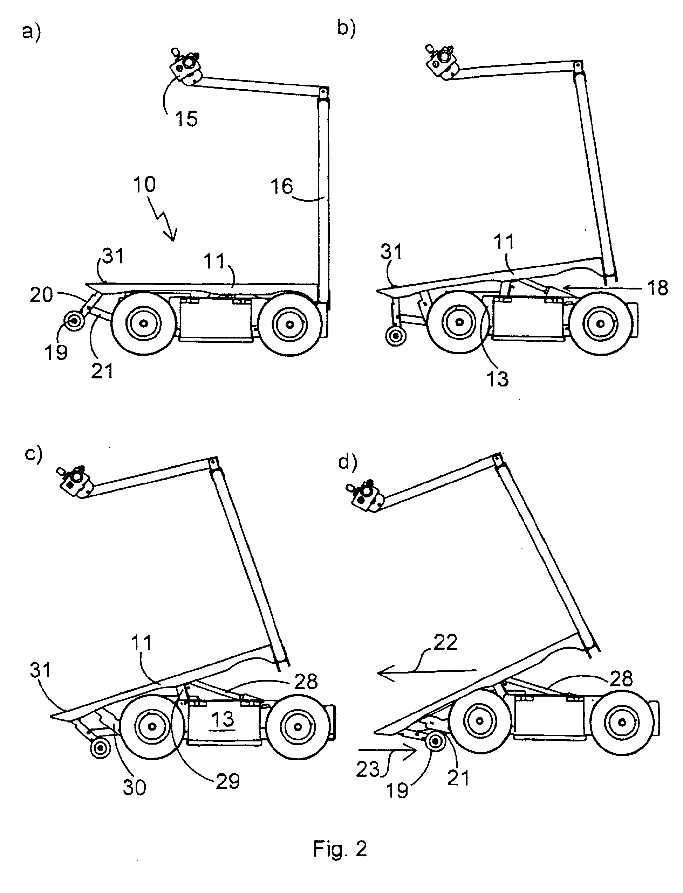

Die Plattform 11 lässt sich zum Abladen einer befüllten Erntekiste 12 nach hinten verfahren und abkippen, was in den Fig. 2a bis 2d im Detail dargestellt ist. Zur Auslösung der Bewegung ist eine Schwenkvorrichtung 18 zwischen dem Fahrzeugchassis 13 und der Plattform 11 angeordnet.

Die Schwenkeinrichtung 18 weist zwei Paare von Hebelanordnungen 29, 30 (Fig. 2c) auf, die beide sowohl gelenkig mit dem Fahrzeugchassis 13 als auch mit der Plattform 11 verbunden sind. Das vordere Paar 29 weist relativ lange Hebelanordnungen auf und greift in einem vorderen Bereich der Plattform 11 an. Das zweite und kürzere Paar 30 greift dahinter an der Plattform 11 an. Beim Ausfahren einer Zylinder-Kolben-Anordnung 28 führt dadurch die Plattform sowohl eine translatorische Bewegung in Richtung Fahrzeugheck als auch eine Kippbewegung nach hinten aus, wie Fig. 2 verdeutlicht. Am hinteren Ende der Plattform 11 sind außerdem zwei Stützräder 19 (Fig. 1) vorgesehen, die bei Erreichen des in Fig. 2b gezeigten Schwenkwinkels der Plattform 11 diese am Boden abstützen und somit ein Kippen des Fahrzeugs verhindern. Die Stützräder 19 sind an Stützbeinen 20 angeordnet, die schwenkbar an der Plattform 11 befestigt sind. Es ist außerdem eine Führung 21 vorgesehen, die zweckmäßigerweise als Zylinder-Kolben-Anordnung ausgebildet ist und die sowohl gelenkig mit dem Stützbein 20 als auch mit der Hebelanordnung 30 verbunden ist. Wie die Fig. 2b bis 2d verdeutlichen, sorgt die Führung 21 dafür, dass bei einer Schwenkbewegung der Plattform 11 in Pfeilrichtung 22 das Stützbein 20 zunehmend in Pfeilrichtung 23 gegen die Plattform 11 verschwenkt wird, sodass die Stützräder 19 in unterschiedlichen Winkelstellungen der Plattform 11 eine Abstützung der Plattform 11 am Boden ermöglichen. Nach dem Zurückschwenken der Plattform 11 in die horizontale Lage bewegt die Führung 21 auch die Stützräder 19 wieder in ihre Ausgangslage zurück.

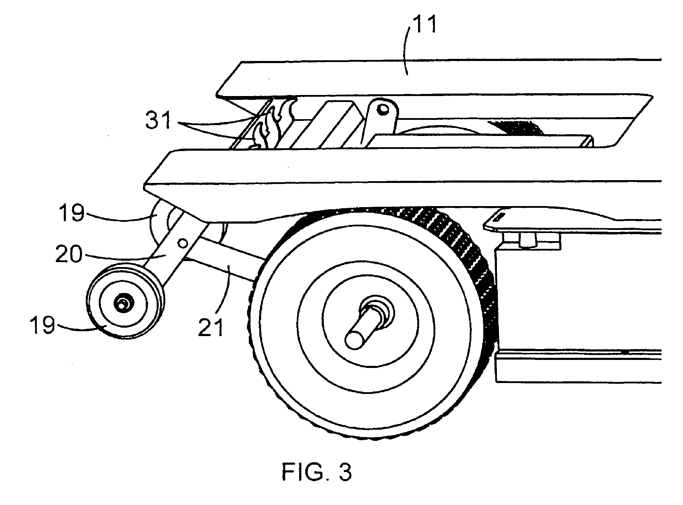

Fig. 3 verdeutlicht, dass an der Plattform 11 Haken 31 angeordnet sind, die bei horizontaler oder schwach geneigter Plattform 11 über diese nach oben vorstehen, wie die Fig. 2a - 2c zeigen. Die Haken 31 verhindern somit ein Herunterrutschen einer auf der Plattform 11 befindlichen Erntekiste während des Abladevorgangs. Die Haken 31 sind bewegungsmäßig mit den Stützbeinen 20 der Stützräder 19 gekoppelt, wie die Fig. 2a-2d zeigen. Die Haken 31 verschwenken daher mit den Stützbeinen 20 mit. Erst bei der in Fig. 2d gezeigten Endstellung der Plattform 11 zum Abladen stehen sie dadurch nicht mehr über die Plattform nach oben vor, sodass eine auf der Plattform 11 befindliche Erntekiste 12 zum Abladen nach unten gleiten kann.

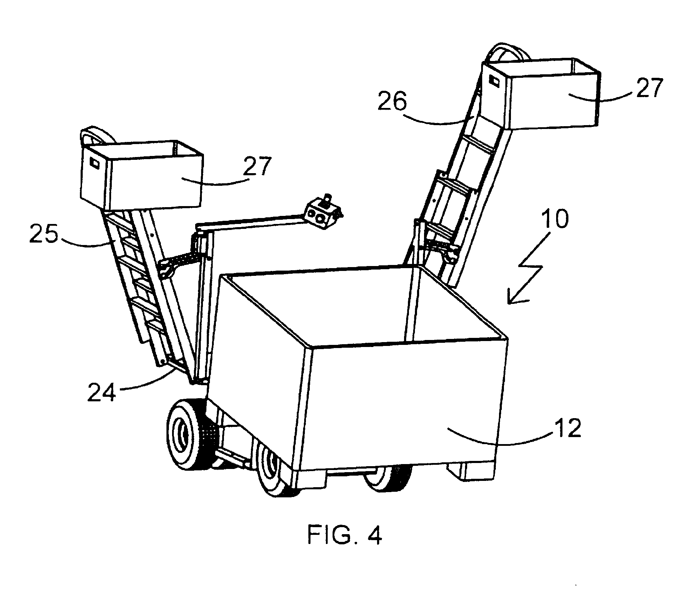

In Fig. 4 ist die optionale Ausrüstung des Fahrzeugs 10 mit einer Ernteplattform 24 gezeigt, wobei die Ernteplattform 24 an beiden Seiten eine ausziehbare Leiter 25, 26 trägt, mit deren Hilfe die Früchte von Bäumen im Gipfelbereich in zunächst kleinere Erntekörbe 27 gepflückt werden können. Die kleinen Erntekörbe 27 können anschließend in die Erntekiste 12 entleert werden.

Fig. 5 zeigt die Montage einer Arbeitsbühne 38 an der Plattform 11, die dazu geneigt wurde, damit die Stützräder 19 mit zur Stabilisierung des gesamten Fahrzeugs 10 beitragen können. Auch die Arbeitsbühne 38 dient dem Abernten von Bäumen im mittleren und im Gipfelbereich sowie für alle Pflegemaßnahmen an den Obstbäumen.

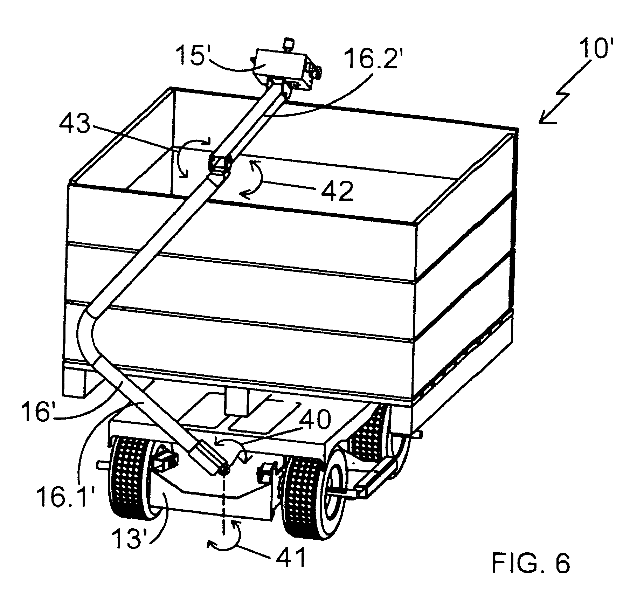

Fig. 6 zeigt ein Erntefahrzeug 10', bei dem das Steuerpult 15' an einem zweiteiligen Tragarm 16' befestigt ist. Der erste Abschnitt 16.1' ist in sich abgewinkelt und entsprechend den Doppelpfeilen 40, 41 um eine horizontale und um eine vertikale Achse schwenkbar mit dem Fahrzeugchassis 13' verbunden. Der zweite Abschnitt 16.2' des Tragarms 16' ist ebenfalls um zwei Achsen entlang der Doppelpfeile 42, 43 schwenkbar mit dem ersten Abschnitt 16.1' verbunden. Dadurch lässt sich das Steuerpult 15' an jeder Seite der Erntekiste 12 platzieren und kann von dort aus bedient werden. Auch ein Nach-oben-Schwenken des Steuerpults 15' ist möglich, sodass es beispielsweise von der in Fig. 5 gezeigten Arbeitsbühne 38 aus bedient werden kann. Durch diesen Schwenkmechanismus kann der Tragarm 16' des Steuerpults 15' so verstellt werden, dass leere Kisten bequem von vorn auf das Fahrzeug 10' befördert werden können, ohne dabei die Bedienung des Fahrzeugs zu beeinträchtigen.

Das Fahrzeug 10 kann mit Hilfe der Steuereinrichtung auch vollständig selbsttätig angetrieben werden. Dabei lässt sich die Steuereinrichtung derart programmieren, dass wahlweise oder kumulativ die Distanz, die das Fahrzeug zurücklegen soll, die Geschwindigkeit, mit der sich das Fahrzeug bewegen soll, und der Modus der Bewegung des Fahrzeugs, das heißt eine kontinuierliche Fahrbewegung oder eine Bewegung in Intervallen, vorgebbar sind. Die Pflücker sind beim selbsttätigen Betrieb des Fahrzeugs also nicht mit dessen Bewegung beschäftigt, sondern können sich voll auf ihre eigentliche Aufgabe konzentrieren. Selbstverständlich ist jedoch auch ein manueller Betrieb des Fahrzeugs 10, 10' möglich. Außerdem kann das Fahrzeug in beide Richtungen, d. h. vorwärts und rückwärts, bewegt werden. Weitere Vorteile ergeben sich, wenn das Fahrzeug eine Panzerlenkung und einen Allradantrieb aufweist.

## Patentansprüche

1. Erntefahrzeug mit einer Plattform (11) zur Aufnahme und zum Abladen von Erntekisten (12), wobei die Plattform zum Abladen einer Erntekiste (12) mittels einer Schwenkvorrichtung (18) in Richtung Fahrzeugheck verschiebbar und nach hinten verschwenkbar ist, **dadurch gekennzeichnet, dass** an der Plattform (11) mindestens ein Stützrad (19) angeordnet ist, das beim Bewegen der Plattform (11) mittels der Schwenkvorrichtung (18) die Plattform (11) am Boden abstützt.

2. Erntefahrzeug nach Anspruch 1, **dadurch gekennzeichnet, dass** die Schwenkvorrichtung (18) zwei Paare von gelenkig mit der Plattform und mit dem Fahrzeugchassis verbundenen Hebelanordnungen (29, 30) aufweist, wobei das erste Paar (29) an einem vorderen Bereich der Plattform (11) und das zweite, mit kürzeren Hebelanordnungen ausgestattete Paar (30) an einem dahinter liegenden Bereich der Plattform (11) angreift und wobei mindesten eine im vorderen Bereich der Plattform angreifende Zylinder-Kolben-Anordnung (28) zur Auslösung der Schwenkbewegung vorgesehen ist.

3. Erntefahrzeug nach Anspruch 1 oder 2, **dadurch gekennzeichnet, dass** das mindestens eine Stützrad (19) am freien Ende eines verschwenkbar an der Plattform (11) gelagerten Stützbeins (20) angeordnet ist.

4. Erntefahrzeug nach einem der Ansprüche 1 bis 3, **dadurch gekennzeichnet, dass** eine Führung (21) vorgesehen ist, die das mindestens eine Stützrad (19) in unterschiedlichen Schwenkwinkeln der Plattform (11) in Bodenkontakt hält.

5. Erntefahrzeug nach den Ansprüchen 2 und 4, **dadurch gekennzeichnet, dass** die Führung (21) von mindestens einer gelenkig mit dem Stützbein (20) und der Hebelanordnung (30) verbundenen Zylinder-Kolben-Anordnung gebildet ist.

6. Erntefahrzeug nach einem der Ansprüche 1 bis 5, **dadurch gekennzeichnet, dass** zwei Stützräder (19) vorgesehen sind.

7. Erntefahrzeug nach den Ansprüchen 3 und 6, **dadurch gekennzeichnet, dass** die Stützbeine (20) beider Stützräder (19) gemeinsam schwenkbar an der Plattform (11) angeordnet sind.

8. Erntefahrzeug nach einem der Ansprüche 1 bis 7, **dadurch gekennzeichnet, dass** die Plattform (11) einfahrbare Haken (31) aufweist, die eine Erntekiste (12) beim Abladen gegen ein Rutschen auf der Plattform (11) sichern.

9. Erntefahrzeug nach einem der Ansprüche 1 bis 8, **dadurch gekennzeichnet, dass** es einen elektromotorischen Allradantrieb aufweist.

10. Erntefahrzeug nach einem der Ansprüche 1 bis 9, **dadurch gekennzeichnet, dass** es eine programmierbare Steuereinheit aufweist, mit der das Fahrzeug (10) selbsttätig mit einer vorgebbaren Geschwindigkeit und/oder über eine vorgebbare Distanz und/oder in einem kontinuierlichen oder in einem Intervallbetrieb bewegbar ist.

11. Erntefahrzeug nach einem der Ansprüche 1 bis 10, **dadurch gekennzeichnet, dass** Ausleger (17) zur Aufnahme mindestens einer weiteren Erntekiste (12) montierbar sind.

12. Erntefahrzeug nach einem der Ansprüche 1 bis 11, **dadurch gekennzeichnet, dass** auf der Plattform (11) eine Arbeitsbühne (38) befestigbar ist.

13. Erntefahrzeug nach einem der Ansprüche 1 bis 12, **dadurch gekennzeichnet, dass** eine Ernteplattform (24) mit seitlichen ausziehbaren Leitern (25, 26) montierbar ist.

14. Erntefahrzeug nach einem der Ansprüche 1 bis 13, **dadurch gekennzeichnet, dass** auf der Plattform (11) ein verstellbarer Sitz montierbar ist.

15. Erntefahrzeug nach einem der Ansprüche 1 bis 14, **dadurch gekennzeichnet, dass** ein Steuerpult (15') vorgesehen ist, das an einem schwenkbaren zweiteiligen Tragarm (16') befestigt ist, wobei der erste Abschnitt (16.1') in sich abgewinkelt und um eine horizontale und um eine vertikale Achse schwenkbar mit dem Fahrzeugchassis (13') verbunden ist.

## Claims

1. Harvester with a platform (11) for picking up and unloading harvesting crates (12), in which the platform for unloading a harvesting crate (12) may be moved in the direction of the rear of the vehicle by means of a swivelling device (18) and may be swivelled backwards, **characterised in that** at least one stabilising wheel (19) is arranged on the platform (11), which supports the platform (11) on the ground when the platform (11) is moved by means of the swivelling device (18).

2. Harvester according to claim 1, **characterised in that** the swivelling device (18) has two pairs of lever arrangements (29, 30), which are linked to the platform and the vehicle chassis, in which the first pair (29) acts on a front area of the platform (11) and the second pair (30), which is fitted with shorter lever arrangements, acts on an area of the platform (11) behind this and in which at least one cylinder piston arrangement (28) for releasing the swivelling movement is provided in the front area of the platform.

3. Harvester according to claim 1 or 2, **characterised in that** the at least one stabilising wheel (19) is arranged at the free end of a supporting leg (20), which is mounted on the platform (11) so that it may tilt.

4. Harvester according to one claims 1 to 3, **characterised in that** a guide (21) is provided, which keeps the at least one stabilising wheel (19) in contact with the ground when the platform (11) is tilted at various angles.

5. Harvester according to claims 2 and 4, **characterised in that** the guide (21) is formed by at least one cylinder piston arrangement, which is linked to the supporting leg (20) and the lever arrangement (30).

6. Harvester according to one of claims 1 to 5, **characterised in that** two stabilising wheels (19) are provided.

7. Harvester according to claims 3 and 6, **characterised in that** the supporting legs (20) of both stabilising wheels (19) are arranged on the platform (11) so that they may be tilted together.

8. Harvester according to one of claims 1 to 7, **characterised in that** the platform (11) has retractable hooks (31), which secure a harvesting crate (12) against sliding on the platform (11) when unloading.

9. Harvester according to one of claims 1 to 8, **characterised in that** it has an electric motor driven four wheel drive.

10. Harvester according to one of claims 1 to 9, **characterised in that** it has a control unit, which may be programmed, with which the vehicle (10) may be moved automatically at a speed, which may be preset, and/or over a distance, which may be preset, and/or in continuous operation or operation at intervals.

11. Harvester according to one of claims 1 to 10, **characterised in that** extension arms (17) may be fitted for picking up at least one further harvesting crate (12).

12. Harvester according to one of claims 1 to 11, **characterised in that** a working platform (38) may be fastened to the platform (11).

13. Harvester according to one of claims 1 to 12, **characterised in that** a harvesting platform (24) may be fitted with ladders (25, 26), which may be extended at the side.

14. Harvester according to one of claims 1 to 13, **characterised in that** an adjustable seat may be fitted to the platform (11).

15. Harvester according to one of claims 1 to 14, **characterised in that** a control panel (15') is provided, which is fastened to a bracket (16') made of two parts, which may be swivelled, in which the first section (16.1') is offset and connected to the vehicle chassis (13') so that it may be swivelled around a horizontal axis and a vertical axis.

## Revendications

1. Récolteuse comprenant une plate-forme (11) pour recevoir et décharger des caisses de récolte (12), dans laquelle la plate-forme permettant de décharger une caisse de récolte (12) peut être déplacée au moyen d'un dispositif de pivotement (18) dans le sens de l'arrière du véhicule et peut être soumise à un pivotement vers l'arrière, **caractérisé en ce que** l'on agence sur la plate-forme (11) au moins une roue d'appui qui, lors du déplacement de la plate-forme (11) au moyen du dispositif de pivotement (18), appuie la plate-forme (11) sur le sol.

2. Récolteuse selon la revendication 1, **caractérisée en ce que** le dispositif de pivotement (18) présente deux paires d'aménagements de levier (29, 30) raccordées par articulation à la plate-forme et au châssis du véhicule, dans laquelle la première paire (29) s'engage sur une zone avant de la plate-forme (11) et la seconde paire (30), équipée d'aménagements de levier plus courts, s'engage sur une zone de la plate-forme (11) qui se trouve derrière, et dans laquelle au moins un aménagement à cylindre-piston (28) s'engageant sur la zone avant de la plate-forme est prévu pour déclencher le mouvement de pivotement.

3. Récolteuse selon la revendication 1 ou la revendication 2, **caractérisée en ce que** la au moins une roue d'appui (19) est aménagée à l'extrémité libre d'une jambe d'appui (20) montée à pivotement sur la plate-forme (11).

4. Récolteuse selon l'une quelconque des revendications 1 à 3, **caractérisée en ce qu'**il est prévu un guide (21), qui maintient la au moins une roue d'appui (19), à différents angles de pivotement de la plate-forme (11), en contact avec le sol.

5. Récolteuse selon les revendications 2 et 4, **caractérisée en ce que** le guide (21) est formé par au moins un aménagement à cylindre-piston relié à pivotement à la jambe d'appui (20) et à l'aménagement à levier (30).

6. Récolteuse selon l'une quelconque des revendications 1 à 5, **caractérisée en ce que** deux roues d'appui (19) sont prévues.

7. Récolteuse selon les revendications 3 et 6, **caractérisée en ce que** les jambes d'appui (20) des deux roues d'appui (19) sont agencées conjointement à pivotement sur la plate-forme (11).

8. Récolteuse selon l'une quelconque des revendications 1 à 7, **caractérisée en ce que** la plate-forme (11) présente des crochets rentrables (31), qui bloquent une caisse de récolte (12), lors du déchargement, contre un glissement sur la plate-forme (11).

9. Récolteuse selon l'une quelconque des revendications 1 à 8, **caractérisée en ce qu'**elle présente quatre roues motrices entraînée par un moteur électrique.

10. Récolteuse selon l'une quelconque des revendications 1 à 9, **caractérisée en ce qu'**elle présente une unité de commande programmable, avec laquelle le véhicule (10) peut se déplacer de manière autonome à une vitesse prédéterminable et/ou sur une distance prédéterminable et/ou en fonctionnement continu ou en fonctionnement par intervalles.

11. Récolteuse selon l'une quelconque des revendications 1 à 10, **caractérisée en ce que** des bras (17) peuvent être montés pour recevoir au moins une autre caisse de récolte (12).

12. Récolteuse selon l'une quelconque des revendications 1 à 11, **caractérisée en ce qu'**un portique de travail (38) peut être fixé sur la plate-forme (11).

13. Récolteuse selon l'une quelconque des revendications 1 à 12, **caractérisée en ce qu'**une plate-forme de récolte (24) peut être montée avec des conducteurs extensibles latéraux (25, 26).

14. Récolteuse selon l'une quelconque des revendications 1 à 13, **caractérisée en ce qu'**un siège réglable peut être monté sur la plate-forme (11).

15. Récolteuse selon l'une quelconque des revendications 1 à 4, **caractérisé en ce qu'**il est prévu un pupitre de commande (15'), qui est fixé à un bras de support pivotant (16') en deux parties, dans laquelle la première section (16.1') est repliée sur elle-même et peut être reliée à pivotement au châssis (13') du véhicule autour d'un axe horizontal et autour d'un axe vertical.
